# DEMANDE DE BREVET EUROPEEN

(11) **EP 4 368 018 A1**
(43) Date de publication de la demande: **15.05.2024**
(21) Numéro de dépôt: 23203410.8
(22) Date de dépôt: 13.10.2023
(51) Int. Cl.: A01M 7/00

(54) **SYSTÈME DE PULVÉRISATION PAR POINT D'INTÉRÊT**

(30) Priorité: 05.11.2022 FR 2211522; 01.05.2023 FR 2304375
(71) Demandeur: Exel Industries, 51200 Epernay (FR)
(72) Inventeur: MARGERIT, Arthur, 77750 Saint-Cyr-sur-Morin (FR)
(74) Mandataire: Argyma

(57) **Abrégé**

La présente invention vise un système de pulvérisation localisée, comportant une rampe de pulvérisation (10), au moins un capteur optique et un système de commande, le système de commande étant configuré pour traiter des images acquises du champ de vision, détecter au moins un point d'intérêt (5) et associer audit point d'intérêt (5) des données de localisation dans un référentiel de la rampe de pulvérisation (10), les données de localisation étant mises à jour en continu par l'intermédiaire d'un système de calcul du système de commande, en fonction du déplacement de ladite rampe de pulvérisation (10), et pour commander ladite au moins une buse de pulvérisation en fonction dudit au moins un point d'intérêt (5), de sorte que, lorsque lesdites données de localisation correspondent à une zone pulvérisable, le système de commande commande l'ouverture de la/des buse(s) de pulvérisation correspondant à ladite zone d'intérêt pour pulvériser le point d'intérêt (5).

## Description

### DOMAINE TECHNIQUE

La présente invention concerne le domaine de la pulvérisation agricole et, plus précisément, de la pulvérisation localisée à l'aide d'un engin agricole, en fonction de données de localisation captées en temps réel. L'invention concerne, en particulier, un système de pulvérisation via des buses commandées en fonction d'images acquises d'une zone à traiter, ainsi qu'un procédé associé.

### ETAT DE LA TECHNIQUE

La pulvérisation agricole a pour objectif d'appliquer à des cultures différents produits de traitement visant, de manière générale, à augmenter leur croissance, leur rendement et/ou leur qualité. Les produits de traitement peuvent notamment être utilisés pour désherber, lutter contre les maladies, l'invasion d'insectes ou de parasites, et apporter les éléments nutritifs nécessaires au bon développement des cultures.

Un système de pulvérisation comprend, de manière classique, au moins une cuve agencée pour contenir un produit de traitement, éventuellement dilué, une rampe de pulvérisation comportant une pluralité de tronçons de pulvérisation équipés chacun d'une buse ou d'une pluralité de buses de pulvérisation, et un circuit hydraulique reliant la cuve aux différents tronçons de pulvérisation. La rampe de pulvérisation s'étend généralement selon un axe transversal par rapport à une direction longitudinale selon laquelle l'engin agricole évolue sur la parcelle. Le circuit hydraulique peut notamment comporter une pompe agencée pour aspirer du produit de traitement dans la cuve et le conduire vers la rampe de pulvérisation, et un régulateur de pression agencé pour maintenir la pression dans le circuit hydraulique à une pression seuil prédéterminée. Chaque buse de pulvérisation est agencée pour pulvériser du produit de traitement sur une largeur prédéterminée de la parcelle définie selon l'axe transversal. Chaque buse, ou chaque pluralité de buses, est ainsi associée à une zone pulvérisable au sol, correspondant sensiblement à une forme géométrique, telle qu'un disque, un ovale ou, approximativement un rectangle, sur laquelle il est possible de délivrer du produit de traitement. La zone pulvérisable associée à chaque buse ou pluralité de buses évolue bien entendu avec le déplacement du système de pulvérisation.

Dans un objectif de réduire la quantité de produit de traitement appliquée, les systèmes de pulvérisation ont été adaptés afin de permettre un traitement localisé des parcelles.

Par traitement localisé, on entend une pulvérisation du produit uniquement sur les zones de la parcelle nécessitant effectivement un traitement. À cet effet, chaque tronçon de pulvérisation est commandé, par exemple au moyen d'un distributeur agencé pour prendre une position d'ouverture, dans laquelle une circulation du produit est possible depuis la cuve jusqu'à la buse de pulvérisation correspondante, et une position de fermeture, dans laquelle ladite circulation est bloquée. Les différents distributeurs peuvent notamment être commandés individuellement. De façon générale, chaque tronçon de pulvérisation peut être commandé de façon individuelle au moyen d'une unité de commande adaptée.

Le système de pulvérisation comporte en outre un système d'acquisition d'images et une unité de commande. Le système d'acquisition d'images est monté sur l'engin agricole et comporte au moins une caméra agencée pour acquérir des images de la parcelle quelques secondes avant le passage des buses du système de pulvérisation. Généralement, il comporte une pluralité de caméras réparties le long d'un deuxième axe transversal par rapport à la direction longitudinale, de sorte à couvrir toute la largeur susceptible d'être traitée par le système de pulvérisation. L'unité de commande est configurée pour déterminer des zones effectives à traiter à l'aide d'un traitement d'images effectué en temps réel sur les images acquises par le système d'acquisition d'images, et pour commander individuellement chacun des distributeurs selon les zones effectives à traiter.

En particulier, il est connu des systèmes de pulvérisation comportant une pluralité de caméras agencées sur la rampe de pulvérisation du système. Les caméras sont configurées pour détecter un point d'intérêt dans le champ de vision des caméras. Le point d'intérêt correspond à une zone à pulvériser, par exemple à cause de la présence de bioagresseurs. Un système de pulvérisation de l'état de la technique découpe en une pluralité de secteurs les parcelles dans le champ de vision des caméras, et situe le point d'intérêt ou les points d'intérêt, c'est-à-dire notamment la ou les zones comportant des bioagresseurs, dans, respectivement, un ou plusieurs secteurs. Une fois les points d'intérêt associés à des secteurs, l'engin agricole se déplace vers lesdits secteurs et les tronçons de pulvérisation seront commandés dans une position ouverte ou fermée, de sorte à délivrer le produit de traitement uniquement sur les secteurs identifiés comme devant être traités.

Toutefois, lorsque l'engin agricole effectue un virage, la sectorisation des parcelles est opérée de nouveau. Les secteurs de la sectorisation initiale ne correspondent alors pas aux secteurs de la nouvelle sectorisation. Il n'est alors plus possible de savoir quel secteur a été pulvérisé, quel secteur ne l'a pas été et cela peut alors engendrer une pulvérisation multiple d'un secteur ou la non-pulvérisation d'un autre secteur, par exemple.

Le but de la présente invention est donc de proposer une solution pour permettre une pulvérisation localisée en repérant les points d'intérêt dans le champ de vision du système de pulvérisation, localiser lesdits points d'intérêt et permettre leur pulvérisation quel que soit la trajectoire ou le mouvement de l'engin agricole.

### PRESENTATION DE L'INVENTION

Plus précisément, l'invention a pour objet un système de pulvérisation localisée, comportant une rampe de pulvérisation, au moins une buse de pulvérisation aménagée sur la rampe de pulvérisation, ladite buse de pulvérisation étant associée à une zone pulvérisable, au moins un capteur optique et un système de commande, chaque capteur optique ayant un champ de vision, le système de commande étant configuré pour traiter des images acquises du champ de vision, détecter au moins un point d'intérêt et associer audit point d'intérêt des données de localisation dans un référentiel de la rampe de pulvérisation, les données de localisation étant mises à jour en continu par l'intermédiaire d'un système de calcul du système de commande, en fonction du déplacement de ladite rampe de pulvérisation, et pour commander ladite au moins une buse de pulvérisation en fonction dudit au moins un point d'intérêt, de sorte que, lorsque les données de localisation du point d'intérêt correspondent à une zone pulvérisable, le système de commande commande l'ouverture de la ou des buse(s) de pulvérisation correspondant à ladite zone pulvérisable pour pulvériser le point d'intérêt.

Notamment, le capteur optique comporte au moins une caméra de profondeur configurée pour permettre l'obtention de données de localisation en trois dimensions des points d'intérêt.

Avantageusement, le système de pulvérisation comporte un ensemble de buses, chacune des buses étant associée à une zone pulvérisable et chacune des buses étant commandée de sorte à, lorsque les données de localisation d'un point d'intérêt correspondent à la zone pulvérisable d'une buse qui lui est associée, le système de commande commande l'ouverture de ladite buse de pulvérisation pour pulvériser ledit point d'intérêt.

Avantageusement encore, le système de pulvérisation comporte un ensemble de buses formant des groupes de buses correspondant à des tronçons de pulvérisation, chacun des groupes de buses étant associé à une zone pulvérisable et chacun des groupes de buses étant commandé en fonction du point d'intérêt auquel il est associé, de sorte à, lorsque les données de localisation du point d'intérêt correspondent à la zone pulvérisable d'un groupe de buses qui lui est associé, le système de commande commande l'ouverture dudit groupe de buses de pulvérisation pour pulvériser ledit point d'intérêt.

Préférentiellement, le système de pulvérisation comporte un ensemble de buses formant des groupes de buses, chaque groupe de buses étant commandé indépendamment les uns des autres par le système de commande.

Préférentiellement encore, le système de pulvérisation est configuré pour traiter les images acquises du champ de vision, détecter au moins un point d'intérêt et associer audit point d'intérêt des données de localisation dans un référentiel de la rampe de pulvérisation.

En particulier, le système de commande met en oeuvre des règles d'activation des buses de pulvérisation : en fonction de conditions, notamment en plus de la condition de présence du point d'intérêt dans une zone pulvérisable, les règles d'activation peuvent comprendre la possibilité d'activer une buse de pulvérisation pour qu'elle délivre du produit de traitement, de désactiver une buse de pulvérisation pour qu'elle ne délivre pas du produit de traitement ; lorsqu'une buse est activée, une règle d'activation peut prévoir la détermination d'une dose spécifique de produit de traitement à appliquer.

L'invention vise également un procédé de pulvérisation d'un produit à pulvériser au moyen d'un système de pulvérisation tel que brièvement décrit ci-dessus, porté ou traîné par un engin agricole, dans lequel le système de commande :
- traite les images acquises du champ de vision par le capteur optique ;
- détecte au moins un point d'intérêt ;
- associe ledit point d'intérêt à des données de localisation dans un référentiel de la rampe de pulvérisation ;
- commande ladite au moins une buse de pulvérisation en fonction dudit au moins un point d'intérêt ; de sorte que, lorsque les données de localisation du point d'intérêt correspondent à une zone pulvérisable, le système de commande commande l'ouverture de la buse de pulvérisation correspondante pour pulvériser le point d'intérêt considéré.

Le système de commande du système de pulvérisation détermine en continu, grâce au système de calcul adapté, les données de localisation des points d'intérêt à traiter, en fonction du déplacement de la rampe de pulvérisation qui avance, tourne, etc.

Avantageusement, le système de commande associe en outre ledit point d'intérêt à une dose de produit à pulvériser.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
la figure 1 est une représentation schématique du système de pulvérisation selon l'invention ; et
la figure 2 est une représentation schématique du système de pulvérisation selon l'invention en fonctionnement.
Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de pulvérisation localisée. Le système de pulvérisation est porté par un engin agricole 15 permettant de pulvériser sur des cultures différents produits de traitement visant de manière générale à augmenter leur croissance, leur rendement et/ou leur qualité. En particulier, les produits de traitement à pulvériser peuvent permettre de traiter des bioagresseurs présents dans les cultures.

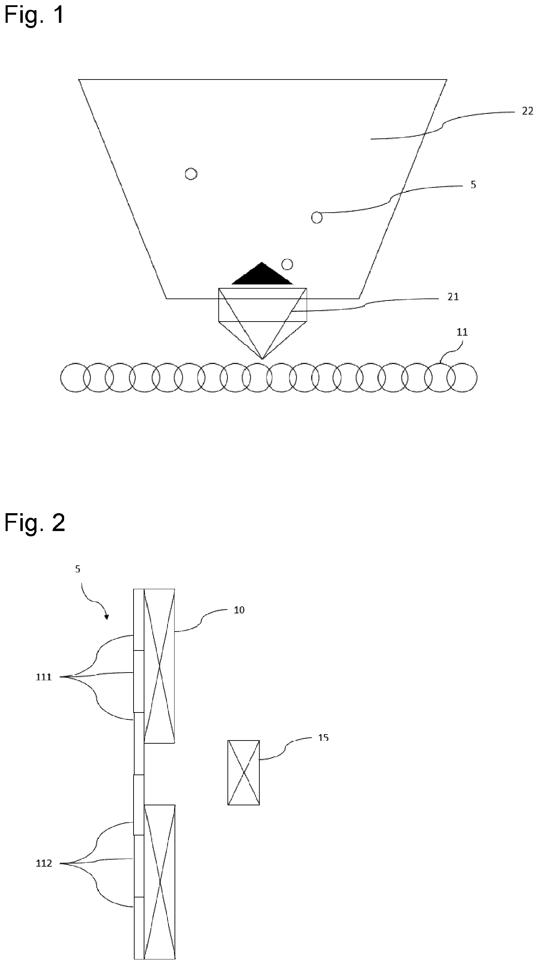

Le système de pulvérisation comporte une rampe de pulvérisation 10, au moins une buse de pulvérisation, au moins un capteur optique 21 et un système de commande. Les signes de référence sont indiqués en regard des figures 1 à 2 schématiques jointes.

La rampe de pulvérisation 10 comporte au moins une buse, généralement un ensemble de buses.

L'ensemble de buses de pulvérisation est aménagé sur la rampe de pulvérisation 10 et chaque buse ou groupe de buses est associé à une zone pulvérisable 11.

Les buses de l'ensemble de buses sont ainsi soit indépendantes les unes des autres, soit forment des groupes de buses et sont réparties par tronçon de pulvérisation.

L'ensemble de buses est notamment configuré pour permettre à la zone pulvérisable 11 d'être modulable. En effet, une buse prise indépendamment permet une pulvérisation sur une zone circulaire. Un groupe de buses prises en commun peut permettre une pulvérisation sur une zone ovale ou sensiblement rectangulaire, par exemple.

Le capteur optique 21 a un champ de vision 22 et chaque point du champ de vision peut être associé à des données de localisation.

Selon un mode de réalisation, le capteur optique 21 est configuré pour permettre l'obtention de données de localisation en deux dimensions, en particulier pour tout point d'intérêt 5 détecté dans une image.

Selon un autre mode de réalisation, le capteur optique 21 peut comporter au moins une caméra de profondeur configurée pour permettre l'obtention de données de localisation en trois dimensions.

Le système de commande est configuré pour traiter des images acquises du champ de vision 22, détecter au moins un point d'intérêt 5 et associer au point d'intérêt 5 détecté des données de localisation dans un référentiel de la rampe de pulvérisation 10.

Pour localiser un point d'intérêt 5 dans une image acquise, le capteur optique 21 peut mettre en oeuvre un rayon passant par son centre optique et par le point d'intérêt 5 à localiser.

Le système de commande est également configuré pour commander l'ensemble de buses de pulvérisation en fonction dudit au moins un point d'intérêt 5, de sorte que, lorsque les données de localisation du point d'intérêt 5 correspondent à une zone pulvérisable 11 de l'ensemble de buses, le système de commande commande l'ouverture de la buse ou du groupe de buses de pulvérisation correspondant, pour pulvériser le point d'intérêt 5 en question.

En particulier, le système de commande peut commander une buse de pulvérisation ou un groupe de buses de pulvérisation en fonction de chacun des points d'intérêt 5 identifiés. Par exemple, si le point d'intérêt 5 est étendu, le système de commande du système de pulvérisation va commander un groupe de buses, correspondant à la zone pulvérisable dans laquelle le point d'intérêt 5 étendu va se trouver.

En cas de point d'intérêt 5 de taille réduite, le système de commande commandera de préférence une buse de pulvérisation de façon indépendante.

Selon un mode de réalisation, le système de pulvérisation peut adapter le nombre de buses à activer et/ou la dose de produit de traitement délivrée par chaque buse, de sorte à s'adapter à chacun des points d'intérêt 5.

Lorsque le système de pulvérisation comporte une pluralité de buses indépendantes les unes des autres, chacune des buses est associée à une zone pulvérisable 11 et chacune des buses est commandée en fonction du point d'intérêt 5 auquel elle est associée. Ainsi, lorsque les données de localisation du point d'intérêt 5 correspondent à la zone pulvérisable 11 d'une buse ou d'un groupe de buses qui lui est associé, le système de commande commande l'ouverture de la buse ou du groupe de buses de pulvérisation pour pulvériser le point d'intérêt 5 considéré.

Lorsque le système de pulvérisation comporte un ensemble de buses formant des groupes de buses, chacun des groupes de buses est ainsi associé à une zone pulvérisable 11 et chacun des groupes de buses est commandé de façon indépendante. Ainsi, lorsque les données de localisation du point d'intérêt correspondent à la zone pulvérisable 11 d'un groupe de buses qui lui est associé, le système de commande commande l'ouverture du groupe de buses de pulvérisation pour pulvériser le point d'intérêt 5 considéré.

Par exemple, en référence à la figure 2, l'engin agricole 15 traîne ou porte la rampe de pulvérisation 10 qui comporte des buses de pulvérisation ou des groupes de buses de pulvérisation respectivement associés aux zones pulvérisables 111 et 112, ici rectangulaires. Les points d'intérêt 5 sont repérés par analyse d'images acquises par le(s) capteur(s) optique(s) 21 disposé(s) sur la rampe de pulvérisation 10. Les points d'intérêt 5 sont associés à des données de localisation dans le référentiel du capteur optique 21 d'abord, puis dans le référentiel de la rampe de pulvérisation 10 car les positions relatives des capteurs optiques 21 sur la rampe 10 sont prédéfinies.

Le système de commande comprend une mémoire qui héberge une base de données dans laquelle sont stockées l'ensemble des informations relatives aux points d'intérêt 5, dont leurs données de localisation.

Toujours en référence à la figure 2, lorsque l'engin agricole 15 et la rampe de pulvérisation 10 se déplacent, la base de données est mise à jour par un système de calcul qui transposent les données de localisation en fonction du déplacement de l'engin agricole 15 et de la rampe de pulvérisation 10. Le système de calcul compare les données de localisation aux zones pulvérisables 111, 112. Ainsi, lorsque les données de localisation des points d'intérêt 5 correspondent à une zone pulvérisable 111, 112, la buse ou le groupe de buses de pulvérisation correspondant est activé pour traiter le point d'intérêt considéré.

C'est ainsi, en référence à la figure 2, que les zones pulvérisables 111, dans lesquelles se situent, à l'instant considéré, des points d'intérêt 5, sont traitées par activation des buses de pulvérisation correspondantes. A l'inverse, les zones pulvérisables 112 ne comportent pas de point d'intérêt 5 et les buses de pulvérisation correspondantes sont désactivées à l'instant considéré.

Selon un mode de réalisation, le système de commande est configuré pour traiter les images acquises du champ de vision 22 du capteur optique 21 (ou des champs de vision des différents capteurs optiques répartis sur la rampe de pulvérisation, le cas échéant), détecter au moins un point d'intérêt 5 et associer au point d'intérêt et à la dose correspondante à des données de localisation dans le référentiel de la rampe de pulvérisation 10.

L'invention concerne en outre un procédé de pulvérisation d'un produit de traitement à pulvériser au moyen du système de pulvérisation porté par un engin agricole 15.

Dans le procédé de pulvérisation, le système de commande du système de pulvérisation traite les images acquises du champ de vision 22 par le capteur optique 21, puis il détecte au moins un point d'intérêt 5. Ensuite, il associe au point d'intérêt 5 des données de localisation dans un référentiel de la rampe de pulvérisation 10 et commande l'au moins une buse de pulvérisation, notamment en termes d'activation ou de désactivation et, le cas échant, de dose à appliquer, en fonction du point d'intérêt. Enfin, lorsque les données de localisation du point d'intérêt 5 correspondent à une zone pulvérisable 11 (ou 111 et 112 sur la figure 2), le système de commande commande l'ouverture de la buse de pulvérisation ou du groupe de buses de pulvérisation pour pulvériser la zone.

Le système de pulvérisation prend en compte les déplacements de la rampe de pulvérisation dans l'établissement des données de localisation du ou des points d'intérêts.

En outre, dans le procédé de pulvérisation, le système de commande peut associer au point d'intérêt 5 une dose de produit de traitement à pulvériser avant d'associer le point d'intérêt 5 et la dose correspondante à des données de localisation dans un référentiel de la rampe de pulvérisation 10. La dose de produit est calculée par une fonction d'activation après qu'une règle d'activation soit validée.

Ainsi, le système de commande permet d'identifier des éléments à traiter, en particulier les points d'intérêt 5. En particulier, le système de commande peut permettre d'identifier des bioagresseurs présents dans les cultures dans les images acquises du champ de vision 22. Les bioagresseurs identifiés forment alors un ou plusieurs points d'intérêt 5. Le système de commande associé alors à chacun des points d'intérêt 5 identifiés des données de localisation dans un référentiel de la rampe de pulvérisation 10.

Le système de commande peut aussi attribuer des caractéristiques aux points d'intérêt 5, par exemple des caractéristiques relatives à sa taille, sa forme ou encore à la fiabilité de la détection et à la dose de produit de traitement à appliquer, le cas échéant.

Selon l'invention, chaque image acquise par le ou les capteurs optiques 21 répartis sur la rampe de pulvérisation 10 est ainsi traitée de façon globale : on attribue des données de localisation à chaque point d'intérêt (correspondant à un élément à traiter), les données de localisation étant à deux dimensions ou, de préférence, à trois dimensions.

Pour obtenir des données de localisation à trois dimensions, le capteur optique 21 peut être équipé d'une caméra de profondeur.

L'avantage des données de localisation à trois dimensions réside dans la meilleure efficacité de la localisation et donc de la pulvérisation, notamment sur des parcelles non planes, en pente ou en dévers, ou comprenant des courbures ou encore en cas de hauts éléments à traiter.

Comme déjà évoqué, on détermine les données de localisation des points d'intérêt 5 à traiter, dans le référentiel du capteur optique 21 d'abord, puis dans le référentiel de la rampe de pulvérisation 10. On connaît en effet, car elles sont prédéfinies, les positions relatives des capteurs optiques 21 sur la rampe de pulvérisation 10.

En outre, le système de pulvérisation peut comprendre un capteur de position par satellite, de type GPS, pour connaître la position de la rampe de pulvérisation 10 et permettre une transposition aisée des données de localisation des points d'intérêt 5 dans le référentiel de la rampe de pulvérisation 10.

Le système de commande du système de pulvérisation détermine en continu, grâce au système de calcul adapté, les données de localisation des points d'intérêt 5 à traiter, en fonction du déplacement de la rampe de pulvérisation 10 qui avance, tourne, etc. Le système de calcul comporte ainsi un processeur adapté, notamment apte à réaliser des calculs sur des nombres flottants.

A cette fin, le système de commande stocke, dans sa mémoire gérée comme un buffer, la base de données comportant les points d'intérêt 5 à traiter et les informations associées, dont les données de localisation de ces points d'intérêt 5 à traiter, les données de localisation étant mises à jour en continu en fonction du déplacement de la rampe de pulvérisation 10 et des nouvelles images acquises du champ de vision 22.

Ensuite, on détermine quand des points d'intérêt 5 à traiter pénètrent dans des zones pulvérisables et on active la ou les buses de pulvérisation correspondantes.

Selon un mode de réalisation, le système de commande met en oeuvre des règles d'activation des buses de pulvérisation : en fonction de conditions, notamment en plus de la condition de présence du point d'intérêt 5 dans une zone pulvérisable, les règles d'activation peuvent comprendre la possibilité d'activer une buse de pulvérisation pour qu'elle délivre du produit de traitement, de désactiver une buse de pulvérisation pour qu'elle ne délivre pas du produit de traitement ; lorsqu'une buse est activée, une règle d'activation peut prévoir la fixation d'une dose spécifique de produit de traitement à appliquer.

Les règles d'activation peuvent prendre en compte la surface de bioagresseurs présents au point d'intérêt 5 à traiter, leur taille ou encore un indice de confiance dans l'identification faite par traitement d'image.

Grâce à l'invention, le système de pulvérisation permet d'obtenir les avantages suivants.

D'abord, l'information permettant la décision d'activation d'une buse par le système de commande n'est pas diffusée sur un secteur, mais concentrée sur un point, tel que les points d'intérêt 5 représentés sur la figure 1.

Ensuite, l'invention n'est pas limitée à une localisation en deux dimensions.

L'invention permet également de gérer un déplacement en diagonal du système de pulvérisation par rapport à une trajectoire précédente, sans risque de double traitement ou d'omission de points d'intérêt.

Par ailleurs, l'invention permet une implémentation aisée de moyens de compensation de virage, par des calculs classiques d'algèbre linéaire.

La gestion de la dynamique des buses de pulvérisation est en outre améliorée.

La présente invention facilite l'adaptation des doses de produit appliquées en fonction de la détection, par la prise en compte possible de paramètres supplémentaires sur les bioagresseurs identifiés (taille, nombre, surface, etc.).

L'invention permet également une meilleure gestion du recouvrement entre des buses de pulvérisation adjacentes.

Grâce à l'invention, on peut réaliser une carte de détection de points à traiter indépendamment d'une résolution de grille, comme c'est le cas lors de sectorisation du champ de vision des capteurs optiques.

Également, les capteurs optiques peuvent être installées de façon plus libre, autrement dit répartis latéralement dans le sens ou à l'inverse du sens d'avancement de la rampe de pulvérisation, voire en diagonal par rapport au sens d'avancement, car les données de localisation des points d'intérêt 5 sont déterminées dans l'image globale acquise et sont transposées dans le référentiel de la rampe de pulvérisation 10.

Autrement dit, l'invention permet l'identification des zones à pulvériser comme étant des points dans le référentiel de la rampe de pulvérisation 10.

Chaque point d'intérêt 5 peut le cas échéant, en plus de ses données de localisation (deux dimensions ou trois dimensions), être associé à des propriétés complémentaires, notamment :
- sa surface de détection (en mm2) ;
- un indice de confiance dans la détection algorithmique (RN) ;
- un type d'élément à traiter (chardon, luzerne, etc.) ;
- un libellé (hauteur, stade, non-pulvérisable, etc.) ;
- un identifiant d'image, c'est-à-dire un numéro de l'image dans laquelle l'élément à traiter a été détecté, de façon à détecter les détections multiples.

Les propriétés du point d'intérêt peuvent être utilisées pour mettre en oeuvre des règles d'activation.

Comme déjà indiqué, l'avantage de localiser des points d'intérêts dans une image, sans sectorisation, est notamment de pouvoir utiliser les outils de l'algèbre linéaire pour prendre en compte les rotations ou des translations multiples du système de pulvérisation. Les déplacements peuvent aussi bien être des translations entre deux positions GPS mesurées, une accélération intégrée au cours du temps, ou encore la mesure d'une vitesse par un capteur externe, notamment.

Les surfaces pulvérisables sont représentées par des formes géométriques simples telles que : cercle, ovale, rectangle, triangle, demi-cercle. Les zones pulvérisables, associées à une buse ou un groupe de buses de pulvérisation peuvent être adaptées en fonction des situations. Les paramètres intrinsèques des formes géométriques sont variables en temps réel, en fonction de la situation.

Par exemple :
- la longueur d'une zone pulvérisable rectangulaire ou le rayon d'une zone pulvérisable circulaire dépend de la vitesse de déplacement de la rampe de pulvérisation.
- les rayons des zones pulvérisables de forme ovale est fonction de la hauteur de rampe ;
- la position de la forme géométrique est adaptée en fonction du battement de la rampe de pulvérisation ;
- la position de la forme géométrique est adaptée en fonction de la pente ;
- etc.

Selon l'invention, on détecte des points à traiter, on les localise et on détecte leur apparition dans une zone pulvérisable qui est alors traitée, notamment en fonction de règles d'activation, le cas échéant.

Dans ce cas, une règle d'activation est une condition qui, quand elle est validée, active la pulvérisation par une buse ou un groupe de buses de pulvérisation, avec éventuellement un dosage spécifique.

Par exemple, une règle d'activation peut être :
- on détecte trois points d'intérêt, avec un indice de confiance donné et des numéros d'image ;
- et au moins un point d'intérêt présente une taille supérieure à 3mm².

Alors, toujours à titre d'exemple :
- le système de commande calcule le maximum de la somme des surfaces des points d'intérêt présents à un instant donné dans une zone pulvérisable sur la base d'une détection dans un même numéro d'image, le divise par la surface de la zone pulvérisable et le multiplie par un ratio de produit de traitement à appliquer par unité de surface de parcelle ;
- le système de commande calcule la dose de produit de traitement à appliquer et active la ou les buses correspondantes.

La détermination de la dose peut aussi tenir compte d'une information de quantité de produit de traitement restant dans la cuve de produit de traitement correspondante du système de pulvérisation pour augmenter ou réduire la dose appliquée.

Bien entendu, les paramètres pris en compte pour être associés aux points d'intérêt, le nombre et la complexité des règles d'activation ou encore le nombre de produits de traitement différents applicables ne sont pas limités aux exemples donnés, l'homme du métier étant à même de les adapter à son besoin.

## Revendications

1. Système de pulvérisation localisée, comportant une rampe de pulvérisation (10), au moins une buse de pulvérisation aménagée sur la rampe de pulvérisation (10), ladite buse de pulvérisation étant associée à une zone pulvérisable (11 ; 111, 112), au moins un capteur optique (21) et un système de commande, chaque capteur optique (21) ayant un champ de vision (22), le système de commande étant configuré pour traiter des images acquises du champ de vision (22), chaque capteur optique (21) comportant au moins une caméra de profondeur configurée pour permettre l'obtention de données de localisation en trois dimensions des points d'intérêt (5) et le système de commande étant configuré pour détecter au moins un point d'intérêt (5) et pour associer audit point d'intérêt (5) des données de localisation dans un référentiel de la rampe de pulvérisation (10), les données de localisation étant mises à jour en continu par l'intermédiaire d'un système de calcul du système de commande, en fonction du déplacement de ladite rampe de pulvérisation (10), et pour commander ladite au moins une buse de pulvérisation en fonction dudit au moins un point d'intérêt (5), de sorte que, lorsque les données de localisation du point d'intérêt correspondent à une zone pulvérisable (11 ; 111, 112), le système de commande commande l'ouverture de la ou des buse(s) de pulvérisation correspondant à ladite zone pulvérisable (11 ; 111, 112) pour pulvériser le point d'intérêt (5).

2. Système de pulvérisation selon la revendication 1, **caractérisé en ce qu'**il comporte un ensemble de buses, chacune des buses étant associée à une zone pulvérisable (11 ; 111, 112) et chacune des buses étant commandée de sorte à, lorsque les données de localisation d'un point d'intérêt (5) correspondent à la zone pulvérisable (11 ; 111, 112) d'une buse qui lui est associée, le système de commande commande l'ouverture de ladite buse de pulvérisation pour pulvériser ledit point d'intérêt (5).

3. Système de pulvérisation selon la revendication 1, **caractérisé en ce qu'**il comporte un ensemble de buses formant des groupes de buses correspondant à des tronçons de pulvérisation, chacun des groupes de buses étant associé à une zone pulvérisable (11 ; 111, 112) et chacun des groupes de buses étant commandé en fonction du point d'intérêt (5) auquel il est associé, de sorte à, lorsque les données de localisation du d'intérêt correspondent à la zone pulvérisable (11 ; 111, 112) d'un groupe de buses qui lui est associé, le système de commande commande l'ouverture dudit groupe de buses de pulvérisation pour pulvériser ledit point d'intérêt (5).

4. Système de pulvérisation selon la revendication précédente, **caractérisé en ce qu'**il comporte un ensemble de buses formant des groupes de buses, chaque groupe de buses étant commandé indépendamment les uns des autres par le système de commande.

5. Système de pulvérisation selon l'une quelconque des revendications précédentes, **caractérisé en ce que** le système de commande est configuré pour traiter les images acquises du champ de vision (22), détecter au moins un point d'intérêt et associer audit point d'intérêt des données de localisation dans un référentiel de la rampe de pulvérisation (10).

6. Procédé de pulvérisation d'un produit à pulvériser au moyen d'un système de pulvérisation selon l'une des revendications 1 à 5, porté ou traîné par un engin agricole (15), dans lequel le système de commande :
- traite les images acquises du champ de vision (22) par le capteur optique (21) ;
- détecte au moins un point d'intérêt (5) ;
- associe ledit point d'intérêt (5) à des données de localisation dans un référentiel de la rampe de pulvérisation (10) ;
- commande ladite au moins une buse de pulvérisation en fonction dudit au moins un point d'intérêt (5) ; de sorte que, lorsque les données de localisation du point d'intérêt (5) correspondent à une zone pulvérisable (11 ; 111, 112), le système de commande commande l'ouverture de la buse de pulvérisation correspondante pour pulvériser le point d'intérêt (5) considéré.

7. Procédé de pulvérisation selon la revendication précédente, dans lequel le système de commande, en outre, associe ledit point d'intérêt (5) à une dose de produit à pulvériser.
